(19) Europäisches Patentamt
European Patent Office
Office européen des brevets

(11) Veröffentlichungsnummer: **0 217 257**
**B1**

(12) # EUROPÄISCHE PATENTSCHRIFT

(45) Veröffentlichungstag der Patentschrift: **04.07.90**

(51) Int. Cl.$^5$: **C 08 F 283/12**

(21) Anmeldenummer: **86113022.7**

(22) Anmeldetag: **22.09.86**

(54) **Diorganosiloxanpolymerisatpulver.**

(30) Priorität: **02.10.85 DE 3535136**

(43) Veröffentlichungstag der Anmeldung:
**08.04.87 Patentblatt 87/15**

(45) Bekanntmachung des Hinweises auf die Patenterteilung:
**04.07.90 Patentblatt 90/27**

(84) Benannte Vertragsstaaten:
**CH DE FR GB IT LI**

(56) Entgegenhaltungen:
**FR-A-2 259 845**
**US-A-3 487 123**

**CHEMICAL ABSTRACTS, Band 103, Nr. 16, Oktober 1985, Seite 38, Zusammenfassung Nr. 124443m, Columbus, Ohio, US; & JP-A-60 88 040**

**PATENT ABSTRACTS OF JAPAN, Band 9, Nr. 228 (C-303)1951r, 13. September 1985; & JP-A-60 88 040**

(73) Patentinhaber: **BAYER AG**
**D-5090 Leverkusen 1 Bayerwerk (DE)**

(72) Erfinder: **Lindner, Christian, Dr.**
**Riehler Strasse 200**
**D-5000 Köln 60 (DE)**
Erfinder: **Grape, Wolfgang, Dr.**
**Roggendorfstrasse 61**
**D-5000 Köln 80 (DE)**
Erfinder: **Kress, Hans-Jürgen, Dr.**
**Scheiblerstrasse 111**
**D-4150 Krefeld 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Polymere Diorganosiloxane werden häufig als hochwertige Kautschuke verwendet; dabei liegen die Diorganosiloxanpolymerisate häufig ölig bis kautschukartig vor; sie müssen nach bekannten Verfahren der Kautschuktechnologie zu gehärteten, vulkanisierten, zum Teil gefüllten gummielastischen Formkörpern verarbeitet werden. Vorteilhaft und wünschenswert wäre es bei der Herstellung solcher gummielastischer Formkörper von rieselfähigen Pulvern ausgehen zu können.

Zur Zeit werden hauptsächlich flüssige oder hochviskose Öle auf Polysiloxanbasis auf verschiedenen Gebieten der Thermoplast- und Kautschukverarbeitung eingesetzt. Auch hier würde die Verwendung der Polysiloxane als Pulver Vorteile mit sich bringen.

Die Herstellung von Dien-, Acrylat- und Olefinkautschuken als Pulver ist bekannt (beispielsweise durch Mahlen bei Temperaturen unterhalb der Glasübergangstemperatur), ebenso ihre technische Nutzung. Wenn man Polysiloxane in dieser Weise behandelt erhält man keine befriedigenden Pulver, was zum Teil auf die Eigenschaften von Polysiloxanen zurückzuführen sein muß; deren Glasübergang findet erst bei sehr niedrigen Temperaturen statt, sie werden bei Raumtemperatur wieder pastös.

Der Ausdruck "befriedigende Pulver" meint, daß die Pulver lagerbeständig bis wenigstens 40°C sein müssen, möglichst wenig Fremdsubstanzen (z.B. Bedpuderungsmittel, wie $TiO_2$ oder $SiO_2$) enthalten und sich zu hochwertigen Kunststoffen verarbeiten lassen.

Es wurde nun gefunden, daß pulverförmige Diorganosiloxanpolymerisate mit diesen Eigenschaften eine bestimmte Teilchenstruktur und einen speziellen chemischen Aufbau aufweisen müssen; solche Pulver können nach einem bestimmten Polymerisationsverfahren erhalten werden.

Gegenstand der Erfindung sind somit Diorganosiloxanpolymerisate in Pulverform mit Teilchen eines mittleren Durchmessers von 0,01—10 mm, insbesondere 0,08—4 mm, die 2—20, insbesondere 5—15 Gew.-%, bezogen auf das Siloxanpolymerisat, eines auf die Teilchen aufpolymerisierten Polymerisates oder Copolymerisates eines oder mehrerer Vinylmonomeren mit einer Glasübergangstemperatur über 25°C enthalten.

Ein weiterer Gegenstand der Erfindung ist ein Verfahren zur Herstellung von Diorganosiloxanpolymerisaten in Pulverform mit Teilchen eines mittleren Durchmessers von 0,01—10 mm, insbesondere 0,08—4 mm, des dadurch gekennzeichnet, ist, daß man eine Emulsion eines Diorganosiloxanpolymerisates unter Ausbildung einer Aufschlämmung vollständig bricht, danach 2—20, insbesondere 5—15 Gew.-%, bezogen auf das Siloxanpolymerisat, Vinylmonomere, die Polymerisate mit Glasübergangstemperaturen über 25°C bilden, in die Aufschlämmung einbringt und gegebenenfalls nach Zugabe radikalbildender Katalysatoren, auf die Siloxanpolymerisatpartikel der Aufschlämmung aufpolymerisiert.

Die in den erfindungsgemäßen Pulver vorliegenden Diorganosiloxanpolymerisate besitzen mittlere Molekulargewichte von größer 30 000 und können unvernetzt, verzweigt, teilvernetzt oder hochvernetzt vorliegen. Besonders bevorzugt Pulver enthalten wenigstens teilvernetzte Diorganosiloxanpolymerisate.

Das Diorganosiloxanpolymerisat enthält Einheiten der allgemeinen Formel

$$R_2SiO,\ RSiO_{3/2},\ R_3SiO_{1/2}\ \text{und}\ SiO2,$$

wobei R einen einwertigen Rest darstellt.

Die Mengen der einzelnen Siloxaneinheiten sind so bemessen, daß auf 100 Mn Einheiten der Formel $R_2SiO$ 0 bis 10 Mol Einheiten der Formel $RSiO_{3/2}$, 0 bis 1,5 Mol Einheiten der Formel $R_3SiO_{1/2}$ und 0 bis 3 Mol Einheiten der Formel $SiO_2$ vorhanden sind.

R kann dabei ein einwertiger gesättigter Kohnlenwasserstoffrest mit 1 bis 18 Kohlenstoffatomen oder eine radikalische angreifbare Gruppe wie der Vinyl-, Allyl- oder γ-Mercaptopropylrest sein. Bevorzgt ist, daß mindestens 80% aller Reste R Methyl sind. Bevorzugut ist weiterhin, daß ein Teil der Reste R Vinyl- und/oder γ-Mercaptopropylgruppen sind. Besonders bevorzugt ist dabei, daß in einem Molekül sowohl Vinyl- als auch γ-Mercaptopropylgruppen vorhanden sind. Die Menge an radikalisch angreifbaren Gruppen beträgt dabei 0 bis 10 Mol-%.

Das Diorganosiloxan besitzt ein Molekulargewicht von mindestens 30 000 und weist als Endgruppen Einheiten der Formel $R_3SiO_{1/2}$ und/oder Hydroxylgruppen auf.

Als Medium für die erfindungsgemäße Umsetzung der Diorganosiloxane dienen organische Lösungsmittel, insbesondere aliphatische Kohlenwasserstoffe, Alkohole, Ester, Ether oder Wasser. Ein bevorzugtes Verfahren arbeitet mit wäßrigen Emulsionen oder verwendet Diorganosiloxanpolymerisate in Wasser und/oder Alkohol.

Ein Diorganopolysiloxan mit dem Molekulargewicht 30 000, welches die untere Grenze in der vorhergehenden Erfindung darstellt, besitzt eine Viskosität von ca. 1400 mPa.s (vgl. Noll, Chemie und Technologie der Silicone, Verlag Chemie Weinheim 1968, S. 219). Silicone dieser Viskosität lassen sich nach den bekannten Methoden in eine Emulsion überführen.

Polydimethylsiloxane mit einem Molekulargewicht von 60 000 oder mehr, wie sie erfindungsgemäß zulässig und sogar bevorzugt sind, sind mit normalen Emulgiermethoden nicht in stabile Emulsionen überführbar. Entsprechende Emulsionen können aber durch Emulsionspolymerisation geeigneter Siliconoligomeren erhalten werden.

Die Herstellung einer Emulsion eines langkettigen Siliconöls mit OH-Endgruppen durch Emulsionspolymerisation ist dem Fachmann im Prinzip geläufig. Beispielhaft wird hierzu auf die US—PS 2 891 910 und die GB—PS 1 024 024 verwiesen. Besonders bevorzugt ist das in der letztgenannten Patentschrift offenbarte Verfahren, eine Alkylbenzolsulfonsäure einzusetzten, da hier Emulgator und Polymerisationskatalysator in einem vorliegen. Nach der Polymerisation wird die Alkylbenzolsulfonsäure neutralisiert, so daß ihre Katalysatoreigenschaften blockiert sind, während die Emuglatoreigenschaften erhalten oder sogar verbessert werden. Dementsprechend kann die Emulgatormenge gering gehalten werden, und man hat keine störenden Fremdmoleküle aus dem Katalysator in dem fertigen Produkt. Anstelle der genannten Alkylbenzolsulfonsäuren können aber auch n-Alkylsulfonsäuren eingesetzt werden. Es ist möglich, neben der katalytisch wirksamen Sulfonsäure auch zusätlich andere Emulgiermittel einzusetzen.

Solch "Co-Emulgatoren" können nichtionisch oder anionisch sein. Als anionische Co-Emulgatoren kommen insbesondere Salze der obengenannten n-Alkyl- oder Alkylbenzolsulfonsäuren in Frage, Nichtioinische Co-Emulgatoren sind Polyoxyethylenderivate von Fettalkoholen und von Fettsäuren. Beispiele sind POE (3)-Laurylalkohol, POE (20)-Oleylalkohol, POE (7)-Nonylphenol oder POE (10)-Stearat (POE bedeutet Ethylenoxid und die folgende Zahl in mittlerer Anzahl der Ethylenoxideinheiten). Nichtionogene Emulgiermittel sind dem Fachmann geläufig. Die Co-Emulgatoren erhöhen die Stabilität der resultierenden Emulsion, üben aber gleichzeitig einen Einfluß auf die Kettenlänge des bei der Polymerisation entstehenden langkettigen, Siliconöls mit OH-Endgruppen aus.

Im allgemeinen sind Siliconöle, die durch Emulsionspolymerisation in Anwesenheit von nichtionogenen Co-Emulgatoren entstanden sind, von niedrigerem Molekulargewicht als solche, bei denen kein Co-Emulgator verwendet wurde. Eine Steuerung des Molekulargewichts ist auch über die Temperatur bei der Gleichgewichtsbilding zwischen Siloxan, Wasser und dem durch Ringöffnung des Siloxans zunächst gebildeten Siloxanöls möglich (bzgl, Einzelheiten zum Zusammenhang zwischen Temperatur und Molekulargewicht wird auf J. Polymer Sci. Part C, *27* pp 27—34 (1969) verwiesen).

Besonders bevorzugt bei der Herstellung einer Emulsion eines langkettigen Siliconöls mit OH-Endgruppen ist das im Folgenden beschriebene Verfahren.

Als Monomer wird Octamethylcyclotetrasiloxan ($D_4$) in einer solchen Menge eingesetzt, daß eine 30—40 %ige Emulsion resultiert, Katalysator ist eine n-Alkylsulfonsäure in einer Menge von 2—6%, bezogen auf die $D_4$-Menge. Als Co-Emulgatoren dienen das Na-Salz der als Katalysator verwendeten Sulfonsäure und POE (5)-Laurylalkohol. Die Temperatur bei der Emulsionpolymerisation beträgt 50—70°C, neutralisiert wird mit Aminen, insbesondere Triethanolamin.

Radikalisch angreifbare Gruppen können in das Siliconpolymer durch Einpolymerisieren geeigneter Siloxanoligomerer eingebaut werden. Geeignet sind z.B. Tetramethyltetravinylcyclotetrasiloxan, γ-Mercaptopropylmethyldimethoxisilan und dessen Hydrolysat.

Verzweigungen können durch Zugabe von z.B. Tetraethoxisilan oder eines Silans der allgemeinen Formel $RSiX_3$, wobei X eine hydrolysierbare Gruppe, insbesondere den Alkoxirest darstellt eingebaut werden. R hat die oben angegebene Bedeutung. Bevorzugt ist R = Methyl oder Phenyl. Besonders bevorzugt sind Tetraethoxisilan, Methyltrimethoxisilan und Phenyltrimethoxisilan.

Die Zugabe von üblichen Füllstoffen ist ebenfalls möglich, direkt nach der Emulsionspolymerisation, gegebenenfalls unter Zusatz eines Verdickers, oder bei der späteren Verarbeitung des Pulvers zu einem technischen Produkt.

Übliche Füllstoffe sind Kieselsäuren, die natürlich vorkommen, pyrogen erzeugt oder gefällt sein können, und/oder andere besonders feinteilige Füllstoffe wie z.B. gefällte Kreiden. Als Kieselsäuren kommen Materialien mit einer Oberfläche von 50 bis 300 $m^2/g$ (nach BET) in Betracht.

Zu den verwendbaren Verdickungsmitteln gehören Cellulosederivate, Alkalisalze von Polyacrylaten bzw. Polymethacrylaten, die Natrium- oder Ammoniumsalze von Carboxylatcopolymerisaten und kolloidale Tone.

Die Silicon-Emulsionen werden anschließend zu einer grobteiligen Aufschlämmung in einem kontinuierlichen Medium koaguliert; Diese Teilchen liegen als sedimentierende Partikel eines mittleren Durchmessers $d_{50}$ von 0,01—10 mm, insbesondere 0,08—4 mm, (mittlerer Durchmesser) vor; $d_{50}$ werden ermittelt durch Ultrazentrifugenmessung [W. Scholtan et al, Colloids, z. Polymere, *250,* 783—796 (1972)]; "sedimentierend" bedeutet hier, daß im Gegensatz zu einem Latex oder einer Emulsion sich die Partikel aufgrund der Schwerkraft schnell absetzen, also sedimentieren, und daß zur Aufrechterhaltung einer Aufschlämmung ständiges Rühren oder Bewegung erforderlich ist.

In diese Aufschlämmung der Diorganosiloxanpolymerisatpartikel in einem anorganischen oder organischen Medium, insbesondere Wasser und/oder Alkohol, werden nun 2—20 Gew.-%, insbesondere 5—15 Gew.-%, bezogen auf 100 Gew.-Tle. Siloxanpolymerisat, Vinylmonomere eingebracht, die Homo- oder Copolymerisate mit Glasübergangstemperaturen von größer 25°C ausbilden können. Als Vinylmonomere eignen sich olefinisch ungesättigte Verbindungen, die radikalisch polymerisierbar sind, insbesondere Vinyl- oder Vinylienmonomere wie Styrol, α-Methylstyrol, kernalkyliertes Styrol, Acrylnitril, Methacrylnitril, Methacrylsäureester mit bis zu 20 C-Atomen im Molekül, Acrylsäureester mit bis zu 20 C-Atomen im Molekül, Acrylsäure, Methacrylsäure, Vinylester, Vinylchlorid, Vinylidenchlorid, Vinylidenfluorid, Olefine, gegebenenfalls in Mischung mit Acrylamiden oder Hydroxy- oder Aminogruppen enthaltenden (Meth)Acrylaten; besonders bevorzugt sind Styrol, Acrylnitril und Alkylmethyacrylat.

Die Menge an Vinyl-Polymerisat in den erfindungsgemäßen Pulvern kann in bestimmten Grenzen variiert werden; die optimale wirksame Menge hängt z.B. ab von der gewünschten Pulverteilchengröße,

der Siloxanpolymerisatstruktur und dem beabsichtigten Einsatzgebiet.

Gegenbenenfalls unter Initierung mit radikalbildenden Substanzen wie Peroxiden, Persulfaten, Hydroperoxiden, Azoderivaten, Peroxiestern werden nun die zudosierten Vinylmonomere derart polymerisiert, daß sie Polymerisat im wesentlichen auf der Oberfläche der Partikel der Aufschlämmung bilden. Die Molekulargewichte des aufpolymerisierten Polymerisats können in weiten Grenzen variiert werden, wobei bekannte Maßnahmen der Molekulargewichtsregelung von Polymerisationen genutzt werder können.

Die Aufpolymerisation der Vinylmonomeren findet bei Temperaturen von 20—110°C statt, insbesondere bei Temperaturen von 40—100°C; die im erfindungsgemäßen Verfahren verwendeten Reaktionsmedien, also das Medium der Aufschlämmung und das des verwendeten Vinylmonomers (oder der Monomeren) müssen aufeinander abgestimmt sein.

Das gebildete Polymerisat muß im Reaktionsmedium praktisch unlöslich sein. Die Vinylmonomeren sind dagegen im Reaktionsmedium bevorzugt gut oder wenigstens teillöslich.

Nach beendeter Polymerisation können die gibildeten Aufschlämmungen der erfindungsmäßen Pulver gegebenenfalls mit üblichen Additiven wie Stabilisatoren,. Weichmachern, Antioxidatien und Pigmenten vermischt werden.

In der weiteren Aufarbeitung wird das Polymerisat vom Medium getrennt, z.B. durch Filtration, gegebenenfalls durch Waschen gesäubert und dann zum Pulver getrocknet.

Die erfindungsgemäßen Pulver lassen sich, eventuell nach Abmischung mit üblichen Füllstoffen, technisch verarbeiten, gegebenenfalls unter Vernetzung, also Vulkanisation, sie lassen sich auf Walzen, Knetern, Kalandern oder in Extrudern verarbeiten, in denen Polysiloxane eingesetzt werden, also als Fungendichtungsmassen, Beschichtungsmaterialien oder als Dämpfungsmaterialien. Ihre technische Verarbeitung erweist sich als besonders vorteilhaft im Vergleich zur Verarbeitung z.B. Pasten oder Ölen.

Formeköper aus den erfindungsgemäßen Formmassen besitzen gute mechanische Festigkeiten und überraschenderweise auch besondere Haftungseigenschaften auf verschiedensten Substratoberflächen.

Die nachfolgenden Beispiele sollen die Herstellung der erfindungsgemäßen Pulver verdeutlichen.

## Beispiele

I. Herstellung von Siliconemulsionen

1. 38,4 Gew.-Tl. Octamethylcyclotetrasiloxan, 1,2 Gew.-Tl. Tetramethyltetravinylcyclotetrasiloxan und 1 Gew.-Tl. Δ-Mercaptopropylmethyldimethoxisilan werden miteinander verrührt, 0,5 Gew.-Tl. Dodecylbenzolsulfonsäure werden zugefügt, anschließend 58,4 Gew.-Tl. Wasser innerhalb 1 Stunde zugegeben. Dabei wird intensiv gerührt. Die Voremulsion wird mit Hilfe einer Hochdruckemulgiermaschine 2 × bei 200 bar homogenisiert. Man gibt weitere, 0,5 Gew.-Tl. Dodecylbenzolsulfonsäure hinzu.

Die Emulsion wird 2 h bei 85°C und anschließend 36 h bei Raumtemperatur gerührt, Neutralisiert wird mit Hilfe von 5 n-NaOH. Es resultieren 100 Gew.-Tl. einer stabilen Emulsion mit einem Feststoffgehalt von ca. 40% (bestimmt nach DIN 53 182).

2. Eine weitere Emulsion wird wie unter 1, beschrieben hergstellt, die die Bestandteile des Beispiel 2) enthält, mit Ausnahme des γ-Mercaptopropylmethyldiethoxysilans.

3. Eine weitere Emulsion wird wie unter 1, beschrieben hergestellt, die zusätzlich zu den Bestandteilen des Beispiels 2) 0,2 Gew.-Tl. Tetraethoxisilan enthält.

4. Siliconharzemulsion aus
30 Gew.-% Siliconharz
30 Gew.-% eines Gemisches aus Xylol und Butanol im Gew.-Verhältnis 4:1
1 Gew.-% nichtionischem Emulgator
39 Gew.-% Wasser,

wobei der Siliconharz ein Hydrolyseprodukt, dargestellt aus
87,4 Mol-% Methyltrischlorsilan
10,9 Mol-% Dimethyldichlorsilan und
1,7 Mol-% Trimethylchlorsilan ist.

II. Herstellung erfindungsgemäßer Pulver

In einem Reaktor werden 4500 Gew.-Tl. Wasser und 180 Gew.-Tl. Magnesiumsulfat vorgelegt und unter Rühren auf 75°C aufgeheizt.

Anschließend läßt man X Gew.-Tle. einer Siliconemulsion (aus I) innerhalb von 30 Min. gleichmäßig in den Reaktor einlaufen.

Im Anschluß daran wird folgende Monomerlösung aus
Y Gew.-Tl. Monomer
Z Gew.-Tl. 2,6-Di-tert.-Butyl-p-Kresol

in 30 Min. in den Reaktor eingespeist. Danach startet man die Polymerisation durch Zugabe einer Lösung von
4 Gew.-Tl. Kaliumperoxidsulfat
in
100 Gew.-Tl. Wasser.

Bei 80°C wird nun 2 Stunden polymerisiert; bei 90°C wird 1 Stunde auspolymerisiert. Nach Abkühlen wird durch Filtration oder Zentrifugation das resultierende Pulver isoliert, gewaschen und getrocknet.

TABELLE 1
Herstellung der Pulver

| Beispiel | Siliconemulsion | X Gew.-Tl. | Monomer | y Gew.Tl.<br>Z Gew.-Tl. p-Kresolderivat |
|---|---|---|---|---|
| 1 | I.1 | 2144 | MAM | y = 110<br>Z = 0,1 |
| 2 | I.2 | 2144 | MAM | Y = 110<br>Z = 0,1 |
| 3 | I.3 | 2144 | MAM | Y = 11<br>Z = 0,1 |
| 4 | I.4 | 2860 | MAM | Y = 200<br>Z = 0,2 |
| 5 | I.1 | 2144 | MAM<br>CHM | Y = 100<br>Y = 20<br>Z = 0,1 |
| 6 | I.1 | 2144 | MAM<br>ACN | Y = 80<br>Y = 30<br>Z = 0,2 |

MAM = Methylmethacrylat
ACN = Acrylnitril
CHM = Cylcohexylmethacrylat

TABELLE 2
Teilchendurchmesser($d_{50}$-Werte) der resultierenden Pulver

| Beispiel | Teilchendurchmesser $d_{50}$ (mm) |
|---|---|
| 1 | 0,12 |
| 2 | 0,15 |
| 3 | 0,20 |
| 4 | 0,35 |
| 5 | 0,20 |
| 6 | 0,11 |

Die Pulver sind lagerbeständig bei Temperaturen bis wenigstens 30°C und lassen sich thermoplastisch verarbeiten.

**Patentansprüche**

1. Pulverförmige Diorganosiloxanpolymerisate aus Pulverteilchen eines mittleren Durchmessers von 0,01 bis 10 mm, die 2—20 Gews.-%, bezogen auf das Siloxanpolymerisat, eines auf die Teilchen aufpolymerisierten Polymerisates oder Copolymerisates eines oder mehrerer Vinylmonomeren mit einer Glasübergangstemperatur über 25°C enthalten.

2. Pulverförmige Diorganosiloxanpolymerisate nach Anspruch 1), dadurch gekennzeichnet, daß man als Vinylmonomere Styrol, Acrylnitril, Alkylmethyacrylat oder Mischungen davon verwendet.

3. Pulverförmige Diorganosiloxanpolymerisate nach Anspruch 1), dadurch gekennzeichnet, daß die Diorganosiloxanpolymerisate wenigstens teilvernetzt sind.

4. Verfahren zur Herstellung von pulverförmigen Diorganosiloxanpolymerisaten aus Teilchen eines mittleren Durchmessers von 0,01—10 mm, dadurch gekennzeichnet, daß man eine Emulsion eines Diorganosiloxanpolymerisates unter Ausbildung einer Aufschlämmung von Diorganosiloxanpolymerisat-Teilchen vollständig bricht, danach 2—20 Gews.-%, bezogen auf das Siloxanpolymerisat, Vinylmonomere, die Polymerisate mit Glasübergangstemperaturen über 25°C bilden, in die Aufschlämmung einbringt und diese Vinylmonomeren, gegebenenfalls nach Zugabe radikalbildender Katalysatoren, auf die Siloxanpolymerisatpartikel der Aufschlämmung im wesentlichen aufpolymerisiert.

**Revendications**

1. Polymérisats de diorganosiloxanes en poudre en particules d'un diamètre moyen de 0,01 à 10 mm, qui contiennent 2—20% en poids, par rapport au polymérisat de siloxane, d'un polymérisat d'un ou plusieurs monomères vinyliques, d'une température de transition vitreuse de plus de 25°C, polymérisé sur les particules.

2. Polymérisats de diorganosiloxanes en poudre selon la revendication 1, caractérisés en ce que l'on utilise comme monomères vinyliques le styrène, l'acrylonitrile, les méthacrylates d'alkyles ou leurs mélanges.

3. Polymérisats de diorganosiloxanes en poudre selon la revenidication 1, caractérisés en ce que les polymérisats de diorganosiloxanes sont au moins partiellement réticulés.

4. Procédé pour la fabrication de polymérisats de diorganosiloxanes en poudre en particules d'un diamètre moyen de 0,01—10 mm, caractérisé en ce que l'on casse complètement une émulsion d'un polymérisat de diorganosiloxane avec formation d'une suspension de particules de polymérisat de diorganosiloxane, on introduit ensuite dans la suspension 2—20% en poids, par rapport au polymérisat de siloxane, de monomères vinyliques qui forment des polymérisats ayant des températures de transition vitreuse de plus de 25°C et on polymérise essentiellement ces monomères vinyliques sur les particules de polymères de siloxane de la suspension, éventuellement après addition de catalyseurs générateurs de radicaux.

**Claims**

1. Powder-form diorganosiloxane polymers of powder particles having a mean diameter of 0.01 to 10 mm which contains 2 to 20% by weight, based on the siloxane polymer, of a polymer or copolymer of one or more vinyl monomers having a glass transition temperature above 25°C polymerized onto the particles.

2. Powder-form diorganosiloxane polymers as claimed in claim 1, characterized in that styrene, acrylonitrile, alkyl methacrylate or mixtures thereof are used as the vinyl monomers.

3. Powder-form diorganosiloxane polymers as claimed in claim 1, characterized in that the diorganosiloxane polymers are at least partly crosslinked.

4. A process for the production of powder-form diorganosiloxane polymers of particles having a mean diameter of 0.01 to 10 mm, characterized in that an emulsion of a diorganosiloxane polymer is completely broken to form a suspension of diorganosiloxane polymer particles, 2 to 20% by weight, based on the siloxane polymer, vinyl monomers which form polymers having glass transition temperatures above 25°C are introduced into the suspension and these vinyl monomers, optionally after addition of radical-forming catalysts, are substantially polymerized onto the siloxane polymer particle of the suspension.